# EUROPEAN PATENT APPLICATION

(11) **EP 3 249 882 A1**
(43) Date of publication of application: **29.11.2017**
(21) Application number: 15881598.5
(22) Date of filing: 15.02.2015
(51) Int. Cl.: H04L 29/08

(54) **DATA UPLOADING METHOD, DEVICE AND SYSTEM**

(71) Applicant: Huawei Technologies Co., Ltd., Longgang District Shenzhen, Guangdong 518129 (CN)
(72) Inventor: LIU, Jianning, Shenzhen Guangdong 518129 (CN)
(74) Representative: Pfenning, Meinig & Partner mbB
(86) International application number: PCT/CN2015/073119
(87) International publication number: WO 2016/127436

(57) **Abstract**

The present invention discloses a data uploading method, apparatus, and system, and relates to the field of network functions virtualization, so as to resolve a problem that a resource waste is caused by an NSD uploading failure. The method includes: sending a first query request to an NFV orchestrator, where the query request carries all VNF package identifiers required by a network service; receiving a query result sent by the network functions virtualization orchestrator, where the query result carries a target VNF package identifier list, and the target VNF package identifier list is used to record an identifier of at least one target VNF package that is not uploaded; if the target VNF package identifier list is not empty, obtaining the at least one target VNF package according to the target VNF package identifier list; and encapsulating a network service descriptor NSD of the network service, the at least one target VNF package, and an identity verification file to send to the network functions virtualization orchestrator, where the identity verification file is used for verifying validity of a user identity. The present invention is mainly applied to a network service-related information uploading process.

## Description

### TECHNICAL FIELD

The present invention relates to the field of network functions virtualization, and in particular, to a data uploading method, apparatus, and system.

### BACKGROUND

Initiated by thirteen main telecommunications operators in the world, NFV (Network Function Virtualization, Network Functions Virtualization) is an organization in which numerous device vendors, IT (Information Technology, information technology) vendors, and the like participate. The NFV is intended to define a requirement of operator network functions virtualization and a related technical report, and expects to implement some network functions in a software form by means of an IT virtualization technology and using a general high-performance and large-capacity server, a switch, and a storage device. For example, software and hardware separation can be implemented by using an NFV technology for various network devices such as a server, a router, a storage device CDN (Content Delivery Network, content delivery network), and a switch. The various network devices can be deployed in a data center, a network node, a user home, or the like. Before a network service (Network Service, NS) is provided for a user, data uploading needs to be performed, including uploading of a network service descriptor (Network Service Descriptor, NSD) and uploading of a virtualized network function package (Virtualized Network Function Package, VNF Package) required by the network service. A current data uploading process is as follows:
1. A user uploads a network service descriptor (Network Service Descriptor, NSD), also referred to as network service description information, to a network-side network functions virtualization orchestrator (NFV Orchestrator). The network functions virtualization orchestrator (NFV Orchestrator) is responsible for resource management and orchestration according to a network service (NS) requested by the user, to monitor VNF resources and running statuses of the VNF resources in real time. If the uploading succeeds, that is, all VNF packages required by the NSD are stored in the network functions virtualization orchestrator, an NSD uploading success acknowledgement message is returned, and then the network service is provided for the user. If the uploading fails, that is, not all VNF packages required by the network service description information are stored in the network functions virtualization orchestrator, an NSD uploading failure message is returned. 2. If the user receives the NSD uploading failure message, according to a current standard specification, the user needs to upload one by one all the VNF packages required by the NSD. In a process of uploading each VNF package, the network functions virtualization orchestrator performs user identity verification on the VNF package uploaded this time. If the verification succeeds, the VNF package is added to a VNF catalog. When all the VNF packages described in the NSD are stored in the VNF catalog, the NSD is added to an NSD catalog, and an NSD uploading success acknowledgement message is sent to the user.

In a process of implementing the foregoing data uploading, the inventor finds that the prior art has at least the following problems: When NSD uploading fails, a user needs to upload one by one all VNF packages required by an NSD to a network functions virtualization orchestrator. User identity verification needs to be performed each time a VNF package is uploaded. As a result, repeated identity verification needs to be performed on N VNF packages of a same NSD, and identity verification needs to be performed repeatedly for a maximum of N-1 times, causing a resource waste.

### SUMMARY

The present invention provides a data uploading method, apparatus, and system, so as to resolve a problem that a resource waste is caused when repeated identity verification is performed on a user upon an NSD uploading failure.

To achieve the foregoing objective, the following technical solutions are used in the present invention.

According to a first aspect, the present invention provides a data uploading method, where the method is applied to a device to which a user currently logs in, the user is a user requesting provision of a network service NS, and the method includes:
sending a first query request to a network functions virtualization orchestrator NFV orchestrator, where the query request carries all virtualized network function package VNF package identifiers required by the network service;
receiving a query result sent by the network functions virtualization orchestrator, where the query result carries a target VNF package identifier list, and the target VNF package identifier list is used to record an identifier of at least one target VNF package that is not uploaded;
if the target VNF package identifier list is not empty, obtaining the at least one target VNF package according to the target VNF package identifier list; and
encapsulating a network service descriptor NSD of the network service, the at least one target VNF package, and an identity verification file to send to the network functions virtualization orchestrator, where the identity verification file is used for verifying validity of a user identity.

With reference to the first aspect, in a first possible implementation of the first aspect, before the receiving a query result sent by the network functions virtualization orchestrator, the method further includes:
sending a second query request to the network functions virtualization orchestrator, where the second query request carries all the VNF package identifiers required by the network service and at least one VNF package version number, and each VNF package version number is corresponding to one VNF package identifier; or
sending a third query request to the network functions virtualization orchestrator, where the third query request carries all the VNF package identifiers required by the network service and a user identity of the user; or
sending a fourth query request to the network functions virtualization orchestrator, where the fourth query request carries all the VNF package identifiers required by the network service, the at least one VNF package version number, and a user identity of the user.

With reference to the first aspect or the first possible implementation of the first aspect, in a second possible implementation of the first aspect, after the obtaining the at least one target VNF package according to the target VNF package identifier list, the method further includes:
encapsulating the NSD of the network service, the at least one target VNF package, the identity verification file, and a verification policy file to send to the network functions virtualization orchestrator, where the verification policy file is used for the network functions virtualization orchestrator to determine how to verify integrity and authenticity of the VNF package.

According to a second aspect, the present invention further provides a data uploading method, where the method is applied to a network functions virtualization orchestrator, and the method includes:
receiving a first query request sent by a user, where the query request carries all VNF package identifiers required by a network service requested by the user;
searching all the VNF package identifiers for at least one target VNF package identifier that is not recorded in a VNF catalog;
sending a target VNF package identifier list to the user, where the target VNF package identifier list is used to record the at least one target VNF package identifier;
receiving a network service package sent by the user, where the network service package carries a network service descriptor NSD of the network service, at least one target VNF package corresponding to the at least one target VNF package identifier, and an identity verification file;
performing identity verification on the user according to the identity verification file; and
if the verification succeeds, completing an uploading procedure for each target VNF package successively.

With reference to the second aspect, in a first possible implementation of the second aspect, before the searching all the VNF package identifiers for at least one target VNF package identifier that is not recorded in a VNF catalog, the method further includes:
receiving a second query request sent by the user, where the second query request carries all the VNF package identifiers required by the network service and at least one VNF package version number, and each VNF package version number is corresponding to one VNF package identifier; and
the searching all the VNF package identifiers for at least one target VNF package identifier that is not recorded in a VNF catalog specifically includes:
   searching all the VNF package identifiers for at least one target VNF package identifier whose VNF package identifier and VNF package version number are not recorded in the VNF catalog.

With reference to the second aspect, in a second possible implementation of the second aspect, before the searching all the VNF package identifiers for at least one target VNF package identifier that is not recorded in a VNF catalog, the method further includes:
receiving a third query request sent by the user, where the third query request carries all the VNF package identifiers required by the network service and a user identity of the user; and
determining, according to the user identity, whether the user has a query permission; and
the searching all the VNF package identifiers for at least one target VNF package identifier that is not recorded in a VNF catalog further includes:
   if the user has the query permission, searching all the VNF package identifiers for the at least one target VNF package identifier that is not recorded in the VNF catalog.

With reference to the second aspect, in a third possible implementation of the second aspect, before the searching all the VNF package identifiers for at least one target VNF package identifier that is not recorded in a VNF catalog, the method further includes:
receiving a fourth query request sent by the user, where the fourth query request carries all the VNF package identifiers required by the network service, at least one VNF package version number, and a user identity of the user; and
determining, according to the user identity, whether the user has a query permission; and
the searching all the VNF package identifiers for at least one target VNF package identifier that is not recorded in a VNF catalog further includes:
   if the user has the query permission, searching all the VNF package identifiers for at least one target VNF package identifier whose VNF package identifier and VNF package version number are not recorded in the VNF catalog.

With reference to any one of the second aspect or the first to the third possible implementations of the second aspect, in a fourth possible implementation of the second aspect, the network service package further carries a verification policy file, the verification policy file is used for the network functions virtualization orchestrator to determine how to verify integrity and authenticity of the VNF package, and before the completing an uploading procedure for each target VNF package successively, the method further includes:
if the network service package does not carry the verification policy file, verifying integrity and authenticity of all VNF packages and the NSD, where the integrity represents whether a program carried in a VNF package is complete, and the authenticity represents whether a function of the program carried in the VNF package is consistent with description in a virtualized network function descriptor VNFD; or if the network service package carries the verification policy file, parsing the verification policy file and determining a verification policy.

With reference to any one of the second aspect or the first to the fourth possible implementations of the second aspect, in a fifth possible implementation of the second aspect, the completing an uploading procedure for each target VNF package successively specifically includes:
adding each target VNF package to the VNF catalog successively, and sending an image carried in the VNF package to a VIM; and
when all VNF packages described in the NSD are added to the VNF catalog, adding the NSD to an NSD catalog.

According to a third aspect, the present invention further provides a data uploading apparatus, where the apparatus is located in a device to which a user currently logs in, the user is a user requesting provision of a network service NS, and the apparatus includes:
a sending unit, configured to send a first query request to a network functions virtualization orchestrator NFV orchestrator, where the query request carries all virtualized network function package VNF package identifiers required by the network service;
a receiving unit, configured to receive a query result sent by the network functions virtualization orchestrator, where the query result carries a target VNF package identifier list, and the target VNF package identifier list is used to record an identifier of at least one target VNF package that is not uploaded; and
an obtaining unit, configured to: when the target VNF package identifier list received by the receiving unit is not empty, obtain the at least one target VNF package according to the target VNF package identifier list, where
the sending unit is further configured to encapsulate a network service descriptor NSD of the network service, the at least one target VNF package obtained by the obtaining unit, and an identity verification file to send to the network functions virtualization orchestrator, where the identity verification file is used for verifying validity of a user identity.

With reference to the third aspect, in a first possible implementation of the third aspect, the sending unit is further configured to:
send a second query request to the network functions virtualization orchestrator, where the second query request carries all the VNF package identifiers required by the network service and at least one VNF package version number, and each VNF package version number is corresponding to one VNF package identifier; or
send a third query request to the network functions virtualization orchestrator, where the third query request carries all the VNF package identifiers required by the network service and a user identity of the user; or
send a fourth query request to the network functions virtualization orchestrator, where the fourth query request carries all the VNF package identifiers required by the network service, the at least one VNF package version number, and a user identity of the user.

With reference to the third aspect or the first possible implementation of the third aspect, in a second possible implementation of the third aspect, the sending unit is further configured to encapsulate the NSD of the network service, the at least one target VNF package, the identity verification file, and a verification policy file to send to the network functions virtualization orchestrator, where the verification policy file is used for the network functions virtualization orchestrator to determine how to verify integrity and authenticity of the VNF package.

According to a fourth aspect, the present invention further provides a data uploading apparatus, where the apparatus is located in a network functions virtualization orchestrator, and the apparatus includes:
a receiving unit, configured to receive a first query request sent by a user, where the query request carries all VNF package identifiers required by a network service requested by the user;
a search unit, configured to search all the VNF package identifiers received by the receiving unit for at least one target VNF package identifier that is not recorded in a VNF catalog;
a sending unit, configured to send a target VNF package identifier list to the user, where the target VNF package identifier list is used to record the at least one target VNF package identifier found by the search unit, where
the receiving unit is further configured to receive a network service package sent by the user, where the network service package carries a network service descriptor NSD of the network service, at least one target VNF package corresponding to the at least one target VNF package identifier, and an identity verification file;
a verification unit, configured to perform identity verification on the user according to the identity verification file received by the receiving unit; and
an uploading unit, configured to: when the verification performed by the verification unit succeeds, complete an uploading procedure for each target VNF package successively.

With reference to the fourth aspect, in a first possible implementation of the fourth aspect, the receiving unit is further configured to:
receive a second query request sent by the user, where the second query request carries all the VNF package identifiers required by the network service and at least one VNF package version number, and each VNF package version number is corresponding to one VNF package identifier; and
the search unit is further configured to:
   search all the VNF package identifiers for at least one target VNF package identifier whose VNF package identifier and VNF package version number are not recorded in the VNF catalog.

With reference to the fourth aspect, in a second possible implementation of the fourth aspect, the receiving unit is further configured to receive a third query request sent by the user, where the third query request carries all the VNF package identifiers required by the network service and a user identity of the user;
the verification unit is further configured to determine, according to the user identity received by the receiving unit, whether the user has a query permission; and
the search unit is further configured to: when the verification unit verifies that the user has the query permission, search all the VNF package identifiers for the at least one target VNF package identifier that is not recorded in the VNF catalog.

With reference to the fourth aspect, in a third possible implementation of the fourth aspect, the sending unit is further configured to receive a fourth query request sent by the user, where the fourth query request carries all the VNF package identifiers required by the network service, at least one VNF package version number, and a user identity of the user;
the verification unit is further configured to determine, according to the user identity, whether the user has a query permission; and
the search unit is further configured to: when the verification unit verifies that the user has the query permission, search all the VNF package identifiers for at least one target VNF package identifier whose VNF package identifier and VNF package version number are not recorded in the VNF catalog.

With reference to any one of the fourth aspect or the first to the third possible implementations of the fourth aspect, in a fourth possible implementation of the fourth aspect, the network service package further carries a verification policy file, the verification policy file is used for the network functions virtualization orchestrator to determine how to verify integrity and authenticity of the VNF package, and the verification unit is further configured to:
if the network service package does not carry the verification policy file, verify integrity and authenticity of all VNF packages and the NSD, where the integrity represents whether a program carried in a VNF package is complete, and the authenticity represents whether a function of the program carried in the VNF package is consistent with description in a virtualized network function descriptor VNFD; or if the network service package carries the verification policy file, parse the verification policy file and determine a verification policy.

With reference to any one of the fourth aspect or the first to the fourth possible implementations of the fourth aspect, in a fifth possible implementation of the fourth aspect, the uploading unit is specifically configured to:
add each target VNF package to the VNF catalog successively, and send an image carried in the VNF package to a VIM; and
when all VNF packages described in the NSD are added to the VNF catalog, add the NSD to an NSD catalog.

According to a fifth aspect, the present invention further provides a data uploading system, where the system includes the apparatus according to the third aspect and the apparatus according to the fourth aspect.

According to a sixth aspect, the present invention further provides a data uploading apparatus, where the apparatus is located in a device to which a user currently logs in, the user is a user requesting provision of a network service NS, and the apparatus includes:
a transmitter, configured to send a first query request to a network functions virtualization orchestrator NFV orchestrator, where the query request carries all virtualized network function package VNF package identifiers required by the network service;
a receiver, configured to receive a query result sent by the network functions virtualization orchestrator, where the query result carries a target VNF package identifier list, and the target VNF package identifier list is used to record an identifier of at least one target VNF package that is not uploaded; and
a processor, configured to: when the target VNF package identifier list received by the receiver is not empty, obtain the at least one target VNF package according to the target VNF package identifier list, where
the transmitter is further configured to encapsulate a network service descriptor NSD of the network service, the at least one target VNF package obtained by the processor, and an identity verification file to send to the network functions virtualization orchestrator, where the identity verification file is used for verifying validity of a user identity.

With reference to the sixth aspect, in a first possible implementation of the sixth aspect, the transmitter is further configured to:
send a second query request to the network functions virtualization orchestrator, where the second query request carries all the VNF package identifiers required by the network service and at least one VNF package version number, and each VNF package version number is corresponding to one VNF package identifier; or
send a third query request to the network functions virtualization orchestrator, where the third query request carries all the VNF package identifiers required by the network service and a user identity of the user; or
send a fourth query request to the network functions virtualization orchestrator, where the fourth query request carries all the VNF package identifiers required by the network service, the at least one VNF package version number, and a user identity of the user.

With reference to the sixth aspect or the first possible implementation of the sixth aspect, in a second possible implementation of the sixth aspect, the transmitter is further configured to encapsulate the NSD of the network service, the at least one target VNF package, the identity verification file, and a verification policy file to send to the network functions virtualization orchestrator, where the verification policy file is used for the network functions virtualization orchestrator to determine how to verify integrity and authenticity of the VNF package.

According to a seventh aspect, the present invention further provides a data uploading apparatus, where the apparatus is located in a network functions virtualization orchestrator, and the apparatus includes:
a receiver, configured to receive a first query request sent by a user, where the query request carries all VNF package identifiers required by a network service requested by the user;
a processor, configured to search all the VNF package identifiers received by the receiver for at least one target VNF package identifier that is not recorded in a VNF catalog; and
a transmitter, configured to send a target VNF package identifier list to the user, where the target VNF package identifier list is used to record the at least one target VNF package identifier found by the processor, where
the receiver is further configured to receive a network service package sent by the user, where the network service package carries a network service descriptor NSD of the network service, at least one target VNF package corresponding to the at least one target VNF package identifier, and an identity verification file; and
the processor is further configured to perform identity verification on the user according to the identity verification file received by the receiver; and
when the verification succeeds, complete an uploading procedure for each target VNF package successively.

With reference to the seventh aspect, in a first possible implementation of the seventh aspect, the receiver is further configured to:
receive a second query request sent by the user, where the second query request carries all the VNF package identifiers required by the network service and at least one VNF package version number, and each VNF package version number is corresponding to one VNF package identifier; and
the processor is further configured to:
   search all the VNF package identifiers for at least one target VNF package identifier whose VNF package identifier and VNF package version number are not recorded in the VNF catalog.

With reference to the seventh aspect, in a second possible implementation of the seventh aspect, the receiver is further configured to receive a third query request sent by the user, where the third query request carries all the VNF package identifiers required by the network service and a user identity of the user; and
the processor is further configured to determine, according to the user identity received by the receiver, whether the user has a query permission; and
when verifying that the user has the query permission, search all the VNF package identifiers for the at least one target VNF package identifier that is not recorded in the VNF catalog.

With reference to the seventh aspect, in a third possible implementation of the seventh aspect, the transmitter is further configured to receive a fourth query request sent by the user, where the fourth query request carries all the VNF package identifiers required by the network service, at least one VNF package version number, and a user identity of the user; and
the processor is further configured to determine, according to the user identity, whether the user has a query permission; and
when verifying that the user has the query permission, search all the VNF package identifiers for at least one target VNF package identifier whose VNF package identifier and VNF package version number are not recorded in the VNF catalog.

With reference to any one of the seventh aspect or the first to the third possible implementations of the seventh aspect, in a fourth possible implementation of the seventh aspect, the network service package further carries a verification policy file, the verification policy file is used for the network functions virtualization orchestrator to determine how to verify integrity and authenticity of the VNF package, and the processor is further configured to:
if the network service package does not carry the verification policy file, verify integrity and authenticity of all VNF packages and the NSD, where the integrity represents whether a program carried in a VNF package is complete, and the authenticity represents whether a function of the program carried in the VNF package is consistent with description in a virtualized network function descriptor VNFD; or if the network service package carries the verification policy file, parse the verification policy file and determine a verification policy.

With reference to any one of the seventh aspect or the first to the fourth possible implementations of the seventh aspect, in a fifth possible implementation of the seventh aspect, the processor is further configured to:
add each target VNF package to the VNF catalog successively, and send an image carried in the VNF package to a VIM; and
when all VNF packages described in the NSD are added to the VNF catalog, add the NSD to an NSD catalog.

According to an eighth aspect, the present invention further provides a data uploading system, where the system includes the apparatus according to the sixth aspect and the apparatus according to the seventh aspect.

According to the data uploading method, apparatus, and system provided in the present invention, an absent VNF package is first determined by means of a query, and therefore, no VNF package is repeatedly sent to a network functions virtualization orchestrator. This saves resources. Subsequently, at least one absent VNF package, an NSD, and an identity verification file are encapsulated and sent to the network functions virtualization orchestrator. In the prior art, only one VNF package can be uploaded each time. When N VNF packages need to be uploaded, data transmission needs to be performed for N times, and the network functions virtualization orchestrator needs to perform identity verification for N times. In the present invention, the network functions virtualization orchestrator can determine validity of a sender of N VNF packages by performing identity verification only once. This avoids repeated identity verification, and improves resource utilization.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a first data uploading method according to an embodiment of the present invention;
FIG. 2 is a flowchart of a second data uploading method according to an embodiment of the present invention;
FIG. 3 is a flowchart of a third data uploading method according to an embodiment of the present invention;
FIG. 4 is a flowchart of a fourth data uploading method according to an embodiment of the present invention;
FIG. 5 is a flowchart of a fifth data uploading method according to an embodiment of the present invention;
FIG. 6 is a flowchart of a sixth data uploading method according to an embodiment of the present invention;
FIG. 7 is a flowchart of a seventh data uploading method according to an embodiment of the present invention;
FIG. 8 is a flowchart of an eighth data uploading method according to an embodiment of the present invention;
FIG. 9 is a flowchart of a ninth data uploading method according to an embodiment of the present invention;
FIG. 10 is a flowchart of a tenth data uploading method according to an embodiment of the present invention;
FIG. 11 is a flowchart of an eleventh data uploading method according to an embodiment of the present invention;
FIG. 12 is a schematic structural diagram of a first data uploading apparatus according to an embodiment of the present invention;
FIG. 13 is a schematic structural diagram of a second data uploading apparatus according to an embodiment of the present invention;
FIG. 14 is a schematic structural diagram of a third data uploading apparatus according to an embodiment of the present invention;
FIG. 15 is a schematic diagram of a first data uploading system according to an embodiment of the present invention;
FIG. 16 is a schematic structural diagram of a fourth data uploading apparatus according to an embodiment of the present invention;
FIG. 17 is a schematic structural diagram of a fifth data uploading apparatus according to an embodiment of the present invention; and
FIG. 18 is a schematic diagram of a second data uploading system according to an embodiment of the present invention.

### DESCRIPTION OF EMBODIMENTS

The following clearly and completely describes the technical solutions in the embodiments with reference to the accompanying drawings in the embodiments. Apparently, the described embodiments are merely some but not all of the embodiments of the present invention. All other embodiments obtained by a person of ordinary skill in the art based on the embodiments of the present invention without creative efforts shall fall within the protection scope of the present invention.

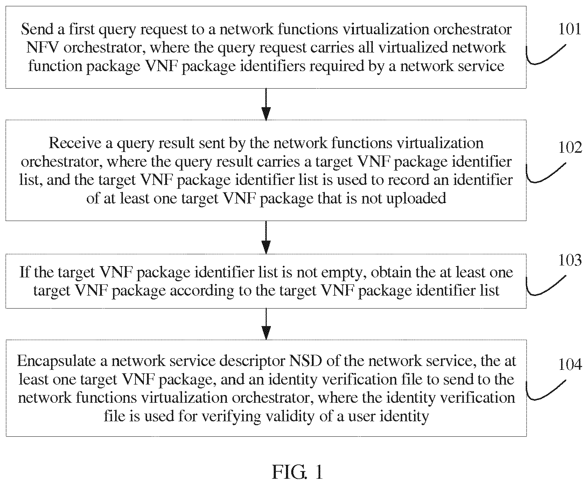

An embodiment of the present invention provides a data uploading method, where the method is applied to a device to which a user currently logs in, and the user is a user requesting provision of a network service NS. The user is a customer or a node that communicates with a network functions virtualization orchestrator NFV orchestrator, and may be generally an operations support system/base station subsystem (OSS/BSS), a vendor (vendor), a network service design vendor, or the like. As shown in FIG. 1, the method includes the following steps.

Step 101: Send a first query request to the network functions virtualization orchestrator NFV orchestrator, where the query request carries all virtualized network function package VNF package identifiers required by the network service.

In this embodiment of the present invention, query requests are classified into a first query request, a second query request, a third query request, and a fourth query request according to different content carried in the query requests. Each query request carries all the virtualized network function package VNF package identifiers required by the network service. An implementation of the query request is a VNF package list query request (VNF package list query request). Only the first query request is described herein, and the second query request, the third query request, and the fourth query request are described in detail in the following context.

The device to which the user currently logs in has functions of sending an NSD to the network functions virtualization orchestrator, and obtaining VNF packages and VNF package identifiers that are required by the NSD. The VNF package identifiers may be obtained by using a local preset database, or may be obtained by using a network, or may be manually imported.

Step 102: Receive a query result sent by the network functions virtualization orchestrator, where the query result carries a target VNF package identifier list, and the target VNF package identifier list is used to record an identifier of at least one target VNF package that is not uploaded.

An implementation of the query result is a list query acknowledgement list query Ack (Acknowledgement). The query result carries the target VNF package identifier list, and the target VNF package identifier list is used to record the identifier of the at least one target VNF package that is not uploaded to the network functions virtualization orchestrator, that is, an identifier of a VNF package that needs to be supplemented by the user.

Step 103: If the target VNF package identifier list is not empty, obtain the at least one target VNF package according to the target VNF package identifier list.

If the target VNF package identifier list is not empty, it indicates that the network functions virtualization orchestrator further needs a target VNF package recorded in the target VNF package identifier list, so as to provide the network service requested by the user to the user. The device to which the user currently logs in obtain each target VNF package in the at least one target VNF package one by one by means of local reading, by using a network, or by means of manual import.

The three manners of obtaining the at least one target VNF package are prioritized as follows: local reading, obtaining by using a network, and manual import. If the target VNF package can be obtained neither by means of local reading nor by using a network, the device to which the user currently logs in outputs prompt information for manual import.

Step 104: Encapsulate a network service descriptor NSD of the network service, the at least one target VNF package, and an identity verification file to send to the network functions virtualization orchestrator, where the identity verification file is used for verifying validity of a user identity.

In the present invention, an encapsulated package is referred to as a network service package. The identity verification file is an identity verification file usually used in the prior art. For details, refer to a definition and usage of the identity verification file in the prior art. Generally, the identity verification file carries one of a user identity, a certificate, or a key used for verifying validity of an identity. The network service descriptor NSD is used for describing all elements required by an NS in the prior art, and includes information such as a VNF descriptor (VNF Descriptor, VNFD) of each VNF package. For details, refer to a definition of an NSD in the prior art.

According to the data uploading method provided in this embodiment of the present invention, before an NSD is sent to a network functions virtualization orchestrator, at least one target VNF package (an absent VNF package) that is used for providing a network service and that is in the network functions virtualization orchestrator is obtained by using a query request, and then the at least one target VNF package, the NSD, and an identity verification file are encapsulated and sent to the network functions virtualization orchestrator. In this way, one or more target VNF packages can be transmitted in one transmission process, and the network functions virtualization orchestrator can perform identity verification on a network service package sent this time, that is, can upload the at least one target VNF package encapsulated in the network service package. This avoids repeated identity verification, and improves resource utilization.

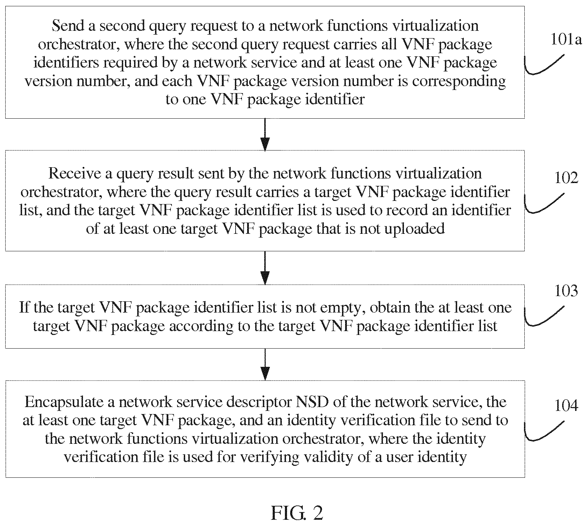

The first query request carries all the VNF package identifiers required by the network service. However, in some scenarios, one VNF package has multiple versions (for example, V1.0, V2.0, and the like). In this case, if a VNF package of V1.0 is stored in the network functions virtualization orchestrator, but the user requests for a VNF package of V2.0, different versions of VNF packages cannot be differentiated only according to VNF package identifiers. On this basis, as further description for the method shown in FIG. 1, an embodiment of the present invention further provides a data uploading method. As shown in FIG. 2, before the receiving a query result sent by the network functions virtualization orchestrator in step 102, the method further includes:
Step 101a: Send a second query request to the network functions virtualization orchestrator, where the second query request carries all the VNF package identifiers required by the network service and at least one VNF package version number, and each VNF package version number is corresponding to one VNF package identifier.

The second query request is used to replace the first query request. One VNF package version number is configured for each VNF package identifier. Alternatively, VNF package version numbers are configured for a part of VNF package identifiers whose versions need to be differentiated. For example, the network service needs ten VNF package identifiers in total, and the second query request carries five VNF package version numbers corresponding to five VNF package identifiers in the ten VNF package identifiers.

It should be noted that, if a VNF package identifier has information for differentiating between different versions, it may be used as an alternative solution of this embodiment of the present invention. For example, if a version field is added to an end of a VNF package identifier, a version number is included in the VNF package identifier.

According to the data uploading method provided in this embodiment of the present invention, a query request carrying a VNF package version number can be sent to a network functions virtualization orchestrator by using a second query request. In this way, different versions of VNF packages can be differentiated. This increases a VNF package query dimension. In a scenario with different versions of VNF packages, search precision is improved.

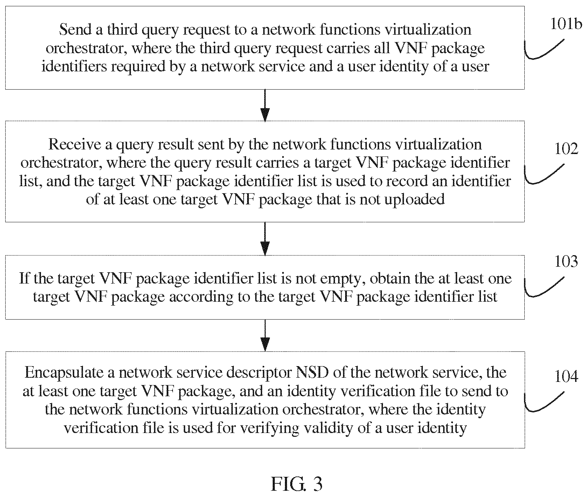

In the foregoing embodiment, regardless of whether the user identity is valid, the network functions virtualization orchestrator makes a response, provided that the device to which the user currently logs in sends a first query request to the network functions virtualization orchestrator. However, when validity of the user identity is not determined, there is a potential security risk to some extent if a response is directly made to the first query request of the user. On this basis, an embodiment of the present invention further provides a data uploading method as further description for the method shown in FIG. 1. As shown in FIG. 3, before the receiving a query result sent by the network functions virtualization orchestrator in step 102, the method further includes:
Step 101b: Send a third query request to the network functions virtualization orchestrator, where the third query request carries all the VNF package identifiers required by the network service and a user identity of the user.

The third query request is an alternative solution of the first query request. In addition to all the VNF package identifiers necessary for the network service, the third query request further carries the user identity. The user identity is used for identifying the user, and each user has a unique user identity. The network functions virtualization orchestrator can perform verification on the user according to the user identity. If the verification succeeds, a response is made to the query request, Otherwise, if the verification fails, a verification failure message is fed back, and cancellation of a response to the query request is notified.

According to the data uploading method provided in this embodiment of the present invention, a third query request carries a user identity uniquely identifying a user, so that a network functions virtualization orchestrator performs verification on the user according to the user identity, so as to further improve security of querying a target VNF package identifier.

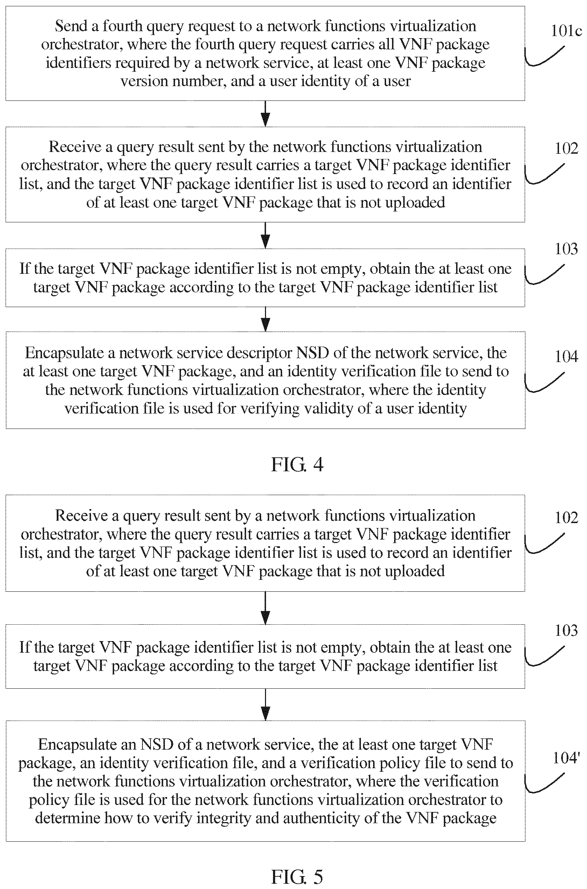

Further, the query request may carry both a VNF package version number and a user identity. On this basis, an embodiment of the present invention further provides a data uploading method. As shown in FIG. 4, before the receiving a query result sent by the network functions virtualization orchestrator in step 102, the method further includes:
Step 101c: Send a fourth query request to the network functions virtualization orchestrator, where the fourth query request carries all the VNF package identifiers required by the network service, the at least one VNF package version number, and a user identity of the user.

The fourth query request includes the VNF package version number carried in the second query request and the user identity carried in the third query request, and this further improves both search precision and query security.

In further consideration of security, an embodiment of the present invention further provides a solution for further enhancing data transmission security. As shown in FIG. 5, after the obtaining the at least one target VNF package according to the target VNF package identifier list if the target VNF package identifier list is not empty in step 103, the method further includes:
Step 104': Encapsulate the NSD of the network service, the at least one target VNF package, the identity verification file, and a verification policy file to send to the network functions virtualization orchestrator, where the verification policy file is used for the network functions virtualization orchestrator to determine how to verify integrity and authenticity of the VNF package.

The verification policy file is used to record how to perform verification on the integrity and the authenticity of the target VNF package. The integrity represents whether a program carried in a VNF package is complete, and the authenticity represents whether a function of the program carried in the VNF package is consistent with description in a virtualized network function descriptor VNFD.

According to the data uploading method provided in this embodiment of the present invention, a verification policy file may be added to a network service package. In this way, integrity and authenticity of a VNF package can be verified based on verification on a user identity, so as to improve stability of a network service.

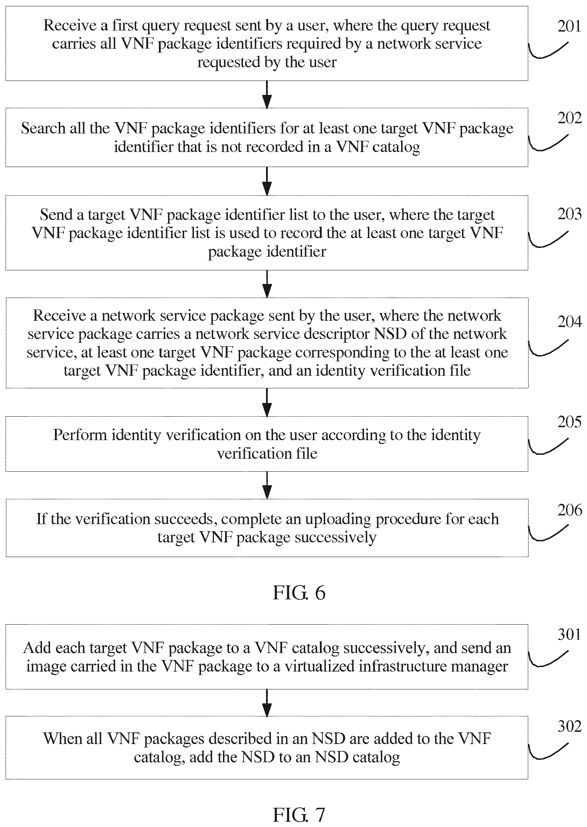

An embodiment of the present invention further provides a data uploading method, and the method is applied to a network functions virtualization orchestrator. As shown in FIG. 6, the method includes the following steps.

Step 201: Receive a first query request sent by a user, where the query request carries all VNF package identifiers required by a network service requested by the user.

Step 202: Search all the VNF package identifiers for at least one target VNF package identifier that is not recorded in a VNF catalog.

The network functions virtualization orchestrator stores a VNF catalog. When a VNF package is stored in the network functions virtualization orchestrator, the network functions virtualization orchestrator stores a VNF package identifier in the VNF catalog, or stores a function corresponding to the VNF package identifier in the VNF catalog. The VNF package identifier is used to uniquely identify the VNF package, and each VNF package is corresponding to one function. When the VNF package identifier is stored in the VNF catalog, it indicates that uploading of the VNF package is completed.

All the VNF package identifiers are obtained from the first query request, and a VNF package identifier is read according to a sequence. The VNF catalog is searched for the read VNF package identifier. If the read VNF package identifier is not found, the read VNF package identifier is a target VNF package identifier, and the read VNF package identifier is added to a target VNF package identifier list. If the read VNF package identifier is found, a next VNF package identifier in all the VNF package identifiers is read, and it is determined whether the next VNF package identifier exists in the VNF catalog. Finally, a target VNF package identifier list including at least one found target VNF package identifier is formed.

Step 203: Send a target VNF package identifier list to the user, where the target VNF package identifier list is used to record the at least one target VNF package identifier.

As an implementation, the VNF package identifier list is sent to the user by using an acknowledgement ACK message.

Step 204: Receive a network service package sent by the user, where the network service package carries a network service descriptor NSD of the network service, at least one target VNF package corresponding to the at least one target VNF package identifier, and an identity verification file.

Step 205: Perform identity verification on the user according to the identity verification file.

For this step, reference may be made to a specific definition of the identity verification file and a method for identity verification according to the identity verification file in the prior art.

Step 206: If the verification succeeds, complete an uploading procedure for each target VNF package successively.

Specifically, as shown in FIG. 7, step 206 may be implemented in the following manner.

Step 301: Add each target VNF package to the VNF catalog successively, and send an image carried in the VNF package to a virtualized infrastructure manager (Virtualized Infrastructure Manager, VIM).

The virtualized infrastructure manager is responsible for managing and allocating VNF resources and storing an image in an VNF Package.

Step 302: When all VNF packages described in the NSD are added to the VNF catalog, add the NSD to an NSD catalog.

The NSD describes all the VNF packages required by the network service. When the VNF catalog records all the VNF packages required by the network service, it indicates that the network service requested by the user can be provided for the user. In addition, prerequisites for providing the network service are checked. For example, it is checked whether an external interface of the VNF packages required by the network service is in the VNF descriptor. If all prerequisites are met, the NSD is added to the NSD catalog.

According to the data uploading method provided in this embodiment of the present invention, a target VNF package identifier list can be provided for a user according to a query request sent by the user, so that the user needs to provide only an absent VNF package. A network service package sent by the user is decapsulated, and verification is performed according to the identity verification file carried in the network service package, so as to determine validity of the user. Then, at least one target VNF package carried in the network service package is uploaded. At least one VNF package can be uploaded by performing verification once, and this saves resources.

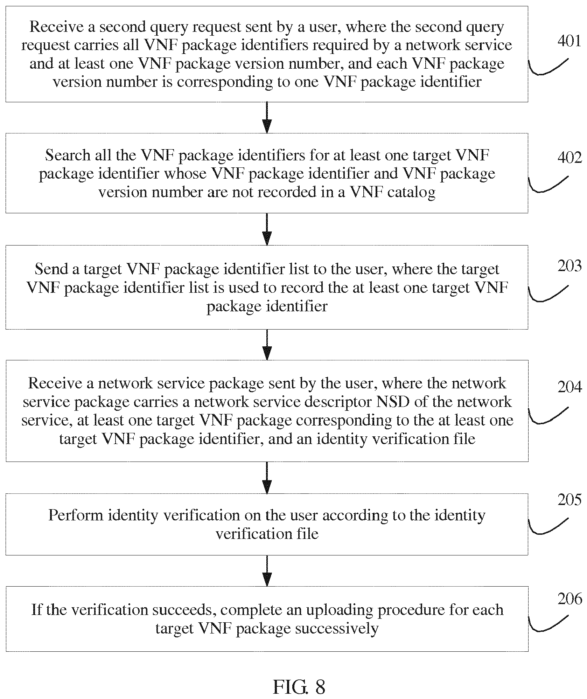

As further description for FIG. 6, an embodiment of the present invention further provides a data uploading method. As shown in FIG. 8, before the searching all the VNF package identifiers for at least one target VNF package identifier that is not recorded in a VNF catalog in step 202, the method further includes the following steps.

Step 401: Receive a second query request sent by the user, where the second query request carries all the VNF package identifiers required by the network service and at least one VNF package version number, and each VNF package version number is corresponding to one VNF package identifier.

The searching all the VNF package identifiers for at least one target VNF package identifier that is not recorded in a VNF catalog in step 202 specifically includes:
Step 402: Search all the VNF package identifiers for at least one target VNF package identifier whose VNF package identifier and VNF package version number are not recorded in the VNF catalog.

If a version number is configured for a VNF package identifier, both the VNF package identifier and the version number need to be recorded in the VNF catalog. Correspondingly, in the VNF catalog, a version number attribute is added for each VNF package identifier.

If a corresponding version number is configured for a VNF package identifier in the query request, it is determined whether the VNF package identifier is recorded in the VNF catalog. If the VNF package identifier is recorded in the VNF catalog, it is further determined whether the VNF package version number corresponding to the VNF package identifier is consistent with a version number recorded in the catalog. If the VNF package identifier is recorded in the VNF catalog or the VNF package version number is inconsistent with the version number recorded in the catalog, the VNF package identifier is determined as a target VNF package identifier, and a next VNF package identifier in the query request is read.

If no version number is configured for a VNF package identifier in the query request, that is, there is only the VNF package identifier, it is only determined whether the VNF package identifier is recorded in the VNF catalog. If the VNF package identifier is not recorded in the VNF catalog, the VNF package identifier is determined as a target VNF package identifier, and a next VNF package identifier in the query request is read. If the VNF package identifier is recorded in the VNF catalog, a next VNF package identifier in the query request is read.

It should be noted that if a VNF package identifier includes a version number, for example, a version number is added to an end of the identifier, the network functions virtualization orchestrator may further determine a VNF package version number according to the VNF package identifier.

According to the data uploading method provided in this embodiment of the present invention, a network functions virtualization orchestrator can differentiate different versions of VNF packages according to a received query request carrying a VNF package version number. This increases a VNF package query dimension. In a scenario with different versions of VNF packages, search precision is improved.

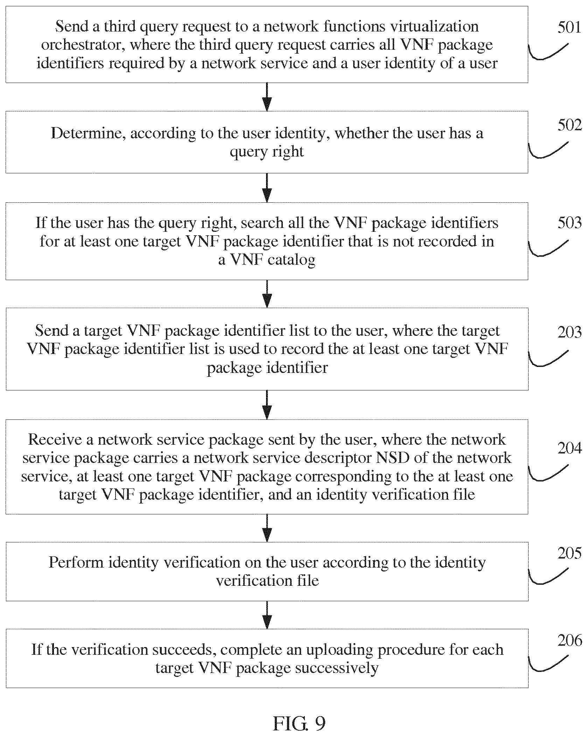

As further description for FIG. 6, an embodiment of the present invention further provides a data uploading method. As shown in FIG. 9, before the searching all the VNF package identifiers for at least one target VNF package identifier that is not recorded in a VNF catalog in step 202, the method further includes the following steps.

Step 501: Send a third query request to the network functions virtualization orchestrator, where the third query request carries all the VNF package identifiers required by the network service and a user identity of the user.

Step 502: Determine, according to the user identity, whether the user has a query permission.

The searching all the VNF package identifiers for at least one target VNF package identifier that is not recorded in a VNF catalog in step 202 further includes:
Step 503: If the user has the query permission, search all the VNF package identifiers for the at least one target VNF package identifier that is not recorded in the VNF catalog.

According to the data uploading method provided in this embodiment of the present invention, a third query request carries a user identity uniquely identifying a user, so that a network functions virtualization orchestrator performs verification on the user according to the user identity, so as to further improve security of querying a target VNF package identifier.

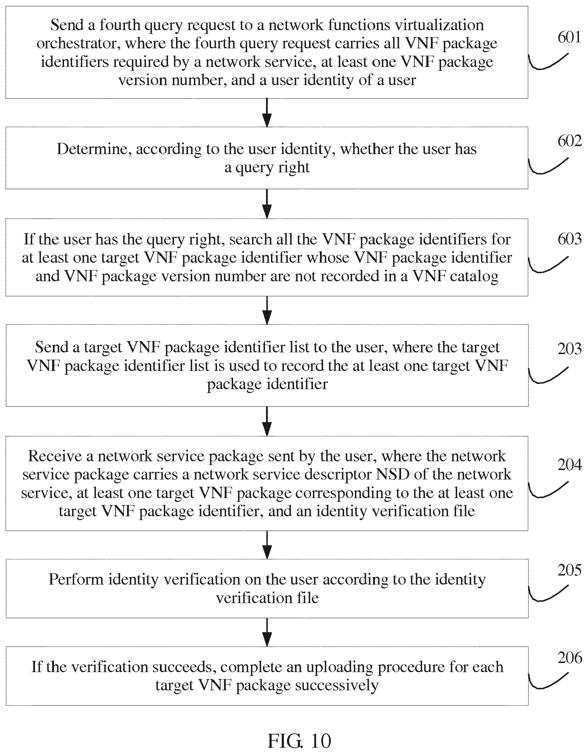

As further description for FIG. 6, an embodiment of the present invention further provides a data uploading method. As shown in FIG. 10, before the searching all the VNF package identifiers for at least one target VNF package identifier that is not recorded in a VNF catalog in step 202, the method further includes the following steps.

Step 601: Send a fourth query request to the network functions virtualization orchestrator, where the fourth query request carries all the VNF package identifiers required by the network service, at least one VNF package version number, and a user identity of the user.

Step 602: Determine, according to the user identity, whether the user has a query permission.

The searching all the VNF package identifiers for at least one target VNF package identifier that is not recorded in a VNF catalog in step 202 further includes:
Step 603: If the user has the query permission, search all the VNF package identifiers for at least one target VNF package identifier whose VNF package identifier and VNF package version number are not recorded in the VNF catalog.

As a combined solution of the methods shown in FIG. 8 and FIG. 9, an embodiment of the present invention further provides a data uploading method, so as to improve search precision and query security.

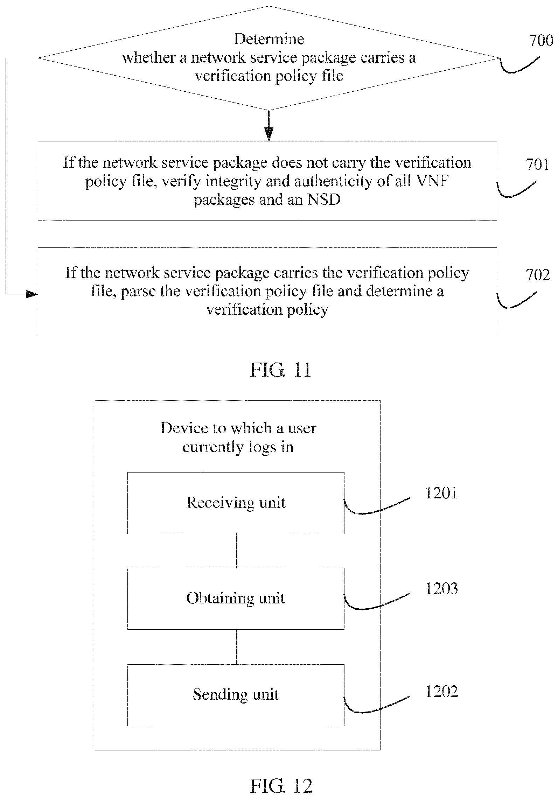

An embodiment of the present invention further provides a data uploading method as further description for the foregoing embodiment. The network service package further carries a verification policy file, and the verification policy file is used for the network functions virtualization orchestrator to determine how to verify integrity and authenticity of the VNF package. As shown in FIG. 11, before the completing an uploading procedure for each target VNF package successively in step 206, the method further includes the following steps.

Step 700: Determine whether the network service package carries the verification policy file.

Step 701: If the network service package does not carry the verification policy file, verify integrity and authenticity of all VNF packages and the NSD.

The integrity represents whether a program carried in a VNF package is complete, and the authenticity represents whether a function of the program carried in the VNF package is consistent with description in a virtualized network function descriptor VNFD.

Step 702: If the network service package carries the verification policy file, parse the verification policy file and determine a verification policy.

As an implementation of this embodiment of the present invention, the verification policy includes:
1. determining one by one whether each VNF package and the NSD are generated by the user; and
2. if a current VNF package or a current NSD is not generated by the user, verifying integrity and authenticity of the current VNF package or the current NSD.

It should be noted that the verification policy file may record different verification policies, so as to perform verification in different scenarios. Specific content of a verification policy may be determined by a person skilled in the art according to an actual requirement.

An embodiment of the present invention further provides a data uploading apparatus, where the apparatus is located in a device to which a user currently logs in, and the user is a user requesting provision of a network service NS. As shown in FIG. 12, the apparatus includes:
a sending unit 1201, configured to send a first query request to a network functions virtualization orchestrator NFV orchestrator, where the query request carries all virtualized network function package VNF package identifiers required by the network service;
a receiving unit 1202, configured to receive a query result sent by the network functions virtualization orchestrator, where the query result carries a target VNF package identifier list, and the target VNF package identifier list is used to record an identifier of at least one target VNF package that is not uploaded; and
an obtaining unit 1203, configured to: when the target VNF package identifier list received by the receiving unit 1202 is not empty, obtain the at least one target VNF package according to the target VNF package identifier list.

The sending unit 1201 is further configured to encapsulate a network service descriptor NSD of the network service, the at least one target VNF package obtained by the obtaining unit 1203, and an identity verification file to send to the network functions virtualization orchestrator, where the identity verification file is used for verifying validity of a user identity.

Further, the sending unit 1201 is further configured to:
send a second query request to the network functions virtualization orchestrator, where the second query request carries all the VNF package identifiers required by the network service and at least one VNF package version number, and each VNF package version number is corresponding to one VNF package identifier; or
send a third query request to the network functions virtualization orchestrator, where the third query request carries all the VNF package identifiers required by the network service and a user identity of the user; or
send a fourth query request to the network functions virtualization orchestrator, where the fourth query request carries all the VNF package identifiers required by the network service, the at least one VNF package version number, and a user identity of the user.

Further, the sending unit 1201 is further configured to encapsulate the NSD of the network service, the at least one target VNF package, the identity verification file, and a verification policy file to send to the network functions virtualization orchestrator, where the verification policy file is used for the network functions virtualization orchestrator to determine how to verify integrity and authenticity of the VNF package.

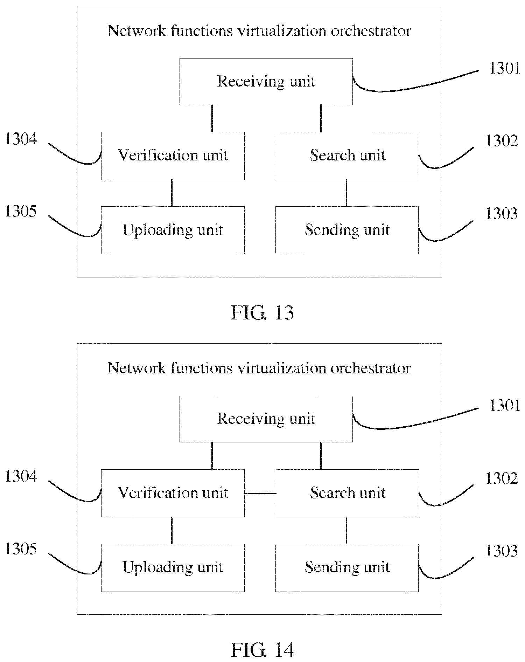

An embodiment of the present invention further provides a data uploading apparatus, and the apparatus is located in a network functions virtualization orchestrator. As shown in FIG. 13, the apparatus includes:
a receiving unit 1301, configured to receive a first query request sent by a user, where the query request carries all VNF package identifiers required by a network service requested by the user;
a search unit 1302, configured to search all the VNF package identifiers received by the receiving unit 1301 for at least one target VNF package identifier that is not recorded in a VNF catalog;
a sending unit 1303, configured to send a target VNF package identifier list to the user, where the target VNF package identifier list is used to record the at least one target VNF package identifier found by the search unit 1302, where
the receiving unit 1301 is further configured to receive a network service package sent by the user, where the network service package carries a network service descriptor NSD of the network service, at least one target VNF package corresponding to the at least one target VNF package identifier, and an identity verification file;
a verification unit 1304, configured to perform identity verification on the user according to the identity verification file received by the receiving unit 1301; and
an uploading unit 1305, configured to: when the verification performed by the verification unit 1304 succeeds, complete an uploading procedure for each target VNF package successively.

Further, the receiving unit 1301 is further configured to:
receive a second query request sent by the user, where the second query request carries all the VNF package identifiers required by the network service and at least one VNF package version number, and each VNF package version number is corresponding to one VNF package identifier.

The search unit 1302 is further configured to:
search all the VNF package identifiers for at least one target VNF package identifier whose VNF package identifier and VNF package version number are not recorded in the VNF catalog.

Further, as shown in FIG. 14, the receiving unit 1301 is further configured to receive a third query request sent by the user, where the third query request carries all the VNF package identifiers required by the network service and a user identity of the user.

The verification unit 1304 is further configured to determine, according to the user identity received by the receiving unit 1301, whether the user has a query permission.

The search unit 1302 is further configured to: when the verification unit 1304 verifies that the user has the query permission, search all the VNF package identifiers for the at least one target VNF package identifier that is not recorded in the VNF catalog.

Further, the sending unit 1303 is further configured to receive a fourth query request sent by the user, where the fourth query request carries all the VNF package identifiers required by the network service, at least one VNF package version number, and a user identity of the user.

The verification unit 1304 is further configured to determine, according to the user identity, whether the user has a query permission.

The search unit 1302 is further configured to: when the verification unit 1304 verifies that the user has the query permission, search all the VNF package identifiers for at least one target VNF package identifier whose VNF package identifier and VNF package version number are not recorded in the VNF catalog.

Further, the network service package further carries a verification policy file, the verification policy file is used for the network functions virtualization orchestrator to determine how to verify integrity and authenticity of the VNF package, and the verification unit 1304 is further configured to:
if the network service package does not carry the verification policy file, verify integrity and authenticity of all VNF packages and the NSD, where the integrity represents whether a program carried in a VNF package is complete, and the authenticity represents whether a function of the program carried in the VNF package is consistent with description in a virtualized network function descriptor VNFD; or if the network service package carries the verification policy file, parse the verification policy file and determine a verification policy, where the verification policy includes:
determining one by one whether each VNF package and the NSD are generated by the user; and
if a current VNF package or a current NSD is not generated by the user, verifying integrity and authenticity of the current VNF package or the current NSD.

Further, the uploading unit 1305 is specifically configured to:
add each target VNF package to the VNF catalog successively, and send an image carried in the VNF package to a VIM; and
when all VNF packages described in the NSD are added to the VNF catalog, add the NSD to an NSD catalog.

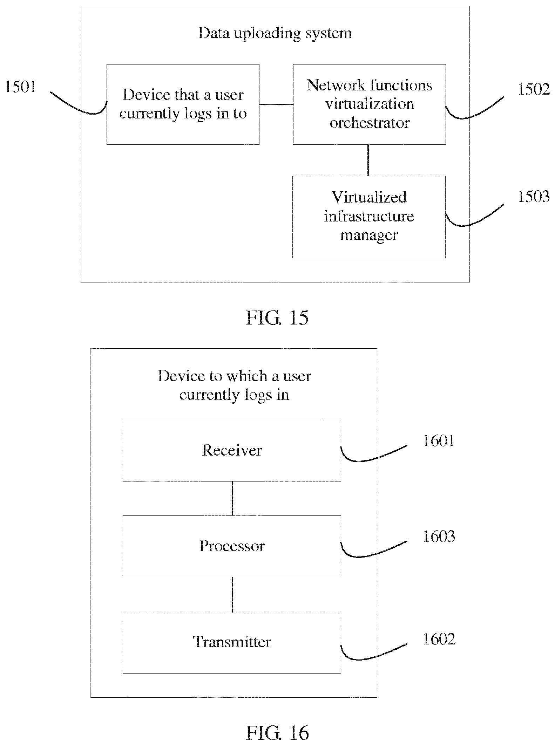

An embodiment of the present invention further provides a data uploading system. As shown in FIG. 15, the system includes a device 1501 to which a user currently logs in (the apparatus shown in FIG. 12) and a network functions virtualization orchestrator 1502 (the apparatus shown in FIG. 13 or 14). The network functions virtualization orchestrator 1502 is connected to a virtualized infrastructure manager VIM 1503.

An embodiment of the present invention further provides a data uploading apparatus, where the apparatus is located in a device to which a user currently logs in, and the user is a user requesting provision of a network service NS. As shown in FIG. 16, the apparatus includes:
a transmitter 1601, configured to send a first query request to a network functions virtualization orchestrator NFV orchestrator, where the query request carries all virtualized network function package VNF package identifiers required by the network service;
a receiver 1602, configured to receive a query result sent by the network functions virtualization orchestrator, where the query result carries a target VNF package identifier list, and the target VNF package identifier list is used to record an identifier of at least one target VNF package that is not uploaded; and
a processor 1603, configured to: when the target VNF package identifier list received by the receiver 1602 is not empty, obtain the at least one target VNF package according to the target VNF package identifier list.

The transmitter 1601 is further configured to encapsulate a network service descriptor NSD of the network service, the at least one target VNF package obtained by the processor 1603, and an identity verification file to send to the network functions virtualization orchestrator, where the identity verification file is used for verifying validity of a user identity.

Further, the transmitter 1601 is further configured to:
send a second query request to the network functions virtualization orchestrator, where the second query request carries all the VNF package identifiers required by the network service and at least one VNF package version number, and each VNF package version number is corresponding to one VNF package identifier; or
send a third query request to the network functions virtualization orchestrator, where the third query request carries all the VNF package identifiers required by the network service and a user identity of the user; or
send a fourth query request to the network functions virtualization orchestrator, where the fourth query request carries all the VNF package identifiers required by the network service, the at least one VNF package version number, and a user identity of the user.

Further, the transmitter 1601 is further configured to encapsulate the NSD of the network service, the at least one target VNF package, the identity verification file, and a verification policy file to send to the network functions virtualization orchestrator, where the verification policy file is used for the network functions virtualization orchestrator to determine how to verify integrity and authenticity of the VNF package.

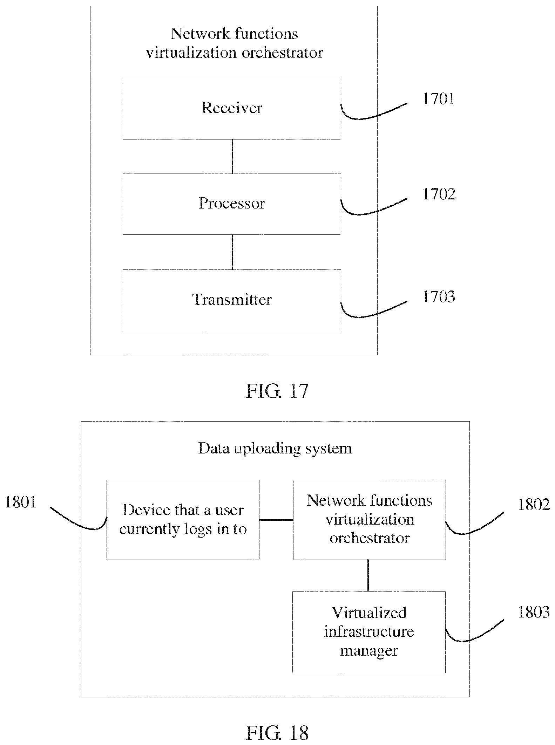

An embodiment of the present invention further provides a data uploading apparatus, and the apparatus is located in a network functions virtualization orchestrator. As shown in FIG. 17, the apparatus includes:
a receiver 1701, configured to receive a first query request sent by a user, where the query request carries all VNF package identifiers required by a network service requested by the user;
a processor 1702, configured to search all the VNF package identifiers received by the receiver 1701 for at least one target VNF package identifier that is not recorded in a VNF catalog;
a transmitter 1703, configured to send a target VNF package identifier list to the user, where the target VNF package identifier list is used to record the at least one target VNF package identifier found by the processor 1702.

The receiver 1701 is further configured to receive a network service package sent by the user, where the network service package carries a network service descriptor NSD of the network service, at least one target VNF package corresponding to the at least one target VNF package identifier, and an identity verification file.

The processor 1702 is further configured to perform identity verification on the user according to the identity verification file received by the receiver 1701; and
when the verification succeeds, complete an uploading procedure for each target VNF package successively.

Further, the receiver 1701 is further configured to:
receive a second query request sent by the user, where the second query request carries all the VNF package identifiers required by the network service and at least one VNF package version number, and each VNF package version number is corresponding to one VNF package identifier.

The processor 1702 is further configured to:
search all the VNF package identifiers for at least one target VNF package identifier whose VNF package identifier and VNF package version number are not recorded in the VNF catalog.

Further, the receiver 1701 is further configured to receive a third query request sent by the user, where the third query request carries all the VNF package identifiers required by the network service and a user identity of the user.

The processor 1702 is further configured to determine, according to the user identity received by the receiver 1701, whether the user has a query permission; and
when verifying that the user has the query permission, search all the VNF package identifiers for the at least one target VNF package identifier that is not recorded in the VNF catalog.

Further, the transmitter 1703 is further configured to receive a fourth query request sent by the user, where the fourth query request carries all the VNF package identifiers required by the network service, at least one VNF package version number, and a user identity of the user.

The processor 1702 is further configured to determine, according to the user identity, whether the user has a query permission; and
when verifying that the user has the query permission, search all the VNF package identifiers for at least one target VNF package identifier whose VNF package identifier and VNF package version number are not recorded in the VNF catalog.

Further, the network service package further carries a verification policy file, the verification policy file is used for the network functions virtualization orchestrator to determine how to verify integrity and authenticity of the VNF package, and the processor 1702 is further configured to:
if the network service package does not carry the verification policy file, verify integrity and authenticity of all VNF packages and the NSD, where the integrity represents whether a program carried in a VNF package is complete, and the authenticity represents whether a function of the program carried in the VNF package is consistent with description in a virtualized network function descriptor VNFD; or if the network service package carries the verification policy file, parse the verification policy file and determine a verification policy, where the verification policy includes:
   determining one by one whether each VNF package and the NSD are generated by the user; and
   if a current VNF package or a current NSD is not generated by the user, verifying integrity and authenticity of the current VNF package or the current NSD.

Further, the processor 1702 is further configured to:
add each target VNF package to the VNF catalog successively, and send an image carried in the VNF package to a VIM; and
when all VNF packages described in the NSD are added to the VNF catalog, add the NSD to an NSD catalog.

An embodiment of the present invention further provides a data uploading system. As shown in FIG. 18, the system includes a device 1801 to which a user currently logs in (the apparatus shown in FIG. 16) and a network functions virtualization orchestrator 1802 (the apparatus shown in FIG. 17). The network functions virtualization orchestrator 1802 is connected to a virtualized infrastructure manager VIM 1803.

Based on the foregoing descriptions of the implementations, a person skilled in the art may clearly understand that the present invention may be implemented by software in addition to necessary universal hardware or by hardware only. In most circumstances, the former is a preferred implementation. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention.

## Claims

1. A data uploading method, wherein the method is applied to a device to which a user currently logs in, the user is a user requesting provision of a network service NS, and the method comprises:
sending a first query request to a network functions virtualization orchestrator NFV orchestrator, wherein the query request carries all virtualized network function package VNF package identifiers required by the network service;
receiving a query result sent by the network functions virtualization orchestrator, wherein the query result carries a target VNF package identifier list, and the target VNF package identifier list is used to record an identifier of at least one target VNF package that is not uploaded;
if the target VNF package identifier list is not empty, obtaining the at least one target VNF package according to the target VNF package identifier list; and
encapsulating a network service descriptor NSD of the network service, the at least one target VNF package, and an identity verification file to send to the network functions virtualization orchestrator, wherein the identity verification file is used for verifying validity of a user identity.

2. The method according to claim 1, wherein before the receiving a query result sent by the network functions virtualization orchestrator, the method further comprises:
sending a second query request to the network functions virtualization orchestrator, wherein the second query request carries all the VNF package identifiers required by the network service and at least one VNF package version number, and each VNF package version number is corresponding to one VNF package identifier; or
sending a third query request to the network functions virtualization orchestrator, wherein the third query request carries all the VNF package identifiers required by the network service and a user identity of the user; or
sending a fourth query request to the network functions virtualization orchestrator, wherein the fourth query request carries all the VNF package identifiers required by the network service, at least one VNF package version number, and a user identity of the user.

3. The method according to claim 1 or 2, wherein after the obtaining the at least one target VNF package according to the target VNF package identifier list, the method further comprises:
encapsulating the NSD of the network service, the at least one target VNF package, the identity verification file, and a verification policy file to send to the network functions virtualization orchestrator, wherein the verification policy file is used for the network functions virtualization orchestrator to determine how to verify integrity and authenticity of the VNF package.

4. A data uploading method, wherein the method is applied to a network functions virtualization orchestrator, and the method comprises:
receiving a first query request sent by a user, wherein the query request carries all VNF package identifiers required by a network service requested by the user;
searching all the VNF package identifiers for at least one target VNF package identifier that is not recorded in a VNF catalog;
sending a target VNF package identifier list to the user, wherein the target VNF package identifier list is used to record the at least one target VNF package identifier;
receiving a network service package sent by the user, wherein the network service package carries a network service descriptor NSD of the network service, at least one target VNF package corresponding to the at least one target VNF package identifier, and an identity verification file;
performing identity verification on the user according to the identity verification file; and
if the verification succeeds, completing an uploading procedure for each target VNF package successively.

5. The method according to claim 4, wherein before the searching all the VNF package identifiers for at least one target VNF package identifier that is not recorded in a VNF catalog, the method further comprises:
receiving a second query request sent by the user, wherein the second query request carries all the VNF package identifiers required by the network service and at least one VNF package version number, and each VNF package version number is corresponding to one VNF package identifier; and
the searching all the VNF package identifiers for at least one target VNF package identifier that is not recorded in a VNF catalog specifically comprises:
searching all the VNF package identifiers for at least one target VNF package identifier whose VNF package identifier and VNF package version number are not recorded in the VNF catalog.

6. The method according to claim 4, wherein before the searching all the VNF package identifiers for at least one target VNF package identifier that is not recorded in a VNF catalog, the method further comprises:
receiving a third query request sent by the user, wherein the third query request carries all the VNF package identifiers required by the network service and a user identity of the user; and
determining, according to the user identity, whether the user has a query permission; and
the searching all the VNF package identifiers for at least one target VNF package identifier that is not recorded in a VNF catalog further comprises:
if the user has the query permission, searching all the VNF package identifiers for the at least one target VNF package identifier that is not recorded in the VNF catalog.

7. The method according to claim 4, wherein before the searching all the VNF package identifiers for at least one target VNF package identifier that is not recorded in a VNF catalog, the method further comprises:
receiving a fourth query request sent by the user, wherein the fourth query request carries all the VNF package identifiers required by the network service, at least one VNF package version number, and a user identity of the user; and
determining, according to the user identity, whether the user has a query permission; and
the searching all the VNF package identifiers for at least one target VNF package identifier that is not recorded in a VNF catalog further comprises:
if the user has the query permission, searching all the VNF package identifiers for at least one target VNF package identifier whose VNF package identifier and VNF package version number are not recorded in the VNF catalog.

8. The method according to any one of claims 4 to 7, wherein the network service package further carries a verification policy file, the verification policy file is used for the network functions virtualization orchestrator to determine how to verify integrity and authenticity of the VNF package, and before the completing an uploading procedure for each target VNF package successively, the method further comprises:
if the network service package does not carry the verification policy file, verifying integrity and authenticity of all VNF packages and the NSD, wherein the integrity represents whether a program carried in a VNF package is complete, and the authenticity represents whether a function of the program carried in the VNF package is consistent with description in a virtualized network function descriptor VNFD; or
if the network service package carries the verification policy file, parsing the verification policy file and determining a verification policy.

9. The method according to any one of claims 4 to 8, wherein the completing an uploading procedure for each target VNF package successively specifically comprises:
adding each target VNF package to the VNF catalog successively, and sending an image carried in the VNF package to a VIM; and
when all VNF packages described in the NSD are added to the VNF catalog, adding the NSD to an NSD catalog.

10. A data uploading apparatus, wherein the apparatus is located in a device to which a user currently logs in, the user is a user requesting provision of a network service NS, and the apparatus comprises:
a sending unit, configured to send a first query request to a network functions virtualization orchestrator NFV orchestrator, wherein the query request carries all virtualized network function package VNF package identifiers required by the network service;
a receiving unit, configured to receive a query result sent by the network functions virtualization orchestrator, wherein the query result carries a target VNF package identifier list, and the target VNF package identifier list is used to record an identifier of at least one target VNF package that is not uploaded; and
an obtaining unit, configured to: when the target VNF package identifier list received by the receiving unit is not empty, obtain the at least one target VNF package according to the target VNF package identifier list, wherein
the sending unit is further configured to encapsulate a network service descriptor NSD of the network service, the at least one target VNF package obtained by the obtaining unit, and an identity verification file to send to the network functions virtualization orchestrator, wherein the identity verification file is used for verifying validity of a user identity.

11. The apparatus according to claim 10, wherein the sending unit is further configured to:
send a second query request to the network functions virtualization orchestrator, wherein the second query request carries all the VNF package identifiers required by the network service and at least one VNF package version number, and each VNF package version number is corresponding to one VNF package identifier; or
send a third query request to the network functions virtualization orchestrator, wherein the third query request carries all the VNF package identifiers required by the network service and a user identity of the user; or
send a fourth query request to the network functions virtualization orchestrator, wherein the fourth query request carries all the VNF package identifiers required by the network service, at least one VNF package version number, and a user identity of the user.

12. The apparatus according to claim 10 or 11, wherein the sending unit is further configured to encapsulate the NSD of the network service, the at least one target VNF package, the identity verification file, and a verification policy file to send to the network functions virtualization orchestrator, wherein the verification policy file is used for the network functions virtualization orchestrator to determine how to verify integrity and authenticity of the VNF package.

13. A data uploading apparatus, wherein the apparatus is located in a network functions virtualization orchestrator, and the apparatus comprises:
a receiving unit, configured to receive a first query request sent by a user, wherein the query request carries all VNF package identifiers required by a network service requested by the user;
a search unit, configured to search all the VNF package identifiers received by the receiving unit for at least one target VNF package identifier that is not recorded in a VNF catalog;
a sending unit, configured to send a target VNF package identifier list to the user, wherein the target VNF package identifier list is used to record the at least one target VNF package identifier found by the search unit, wherein
the receiving unit is further configured to receive a network service package sent by the user, wherein the network service package carries a network service descriptor NSD of the network service, at least one target VNF package corresponding to the at least one target VNF package identifier, and an identity verification file;
a verification unit, configured to perform identity verification on the user according to the identity verification file received by the receiving unit; and
an uploading unit, configured to: when the verification performed by the verification unit succeeds, complete an uploading procedure for each target VNF package successively.

14. The apparatus according to claim 13, wherein the receiving unit is further configured to:
receive a second query request sent by the user, wherein the second query request carries all the VNF package identifiers required by the network service and at least one VNF package version number, and each VNF package version number is corresponding to one VNF package identifier; and
the search unit is further configured to:
search all the VNF package identifiers for at least one target VNF package identifier whose VNF package identifier and VNF package version number are not recorded in the VNF catalog.

15. The apparatus according to claim 13, wherein the receiving unit is further configured to receive a third query request sent by the user, wherein the third query request carries all the VNF package identifiers required by the network service and a user identity of the user;
the verification unit is further configured to determine, according to the user identity received by the receiving unit, whether the user has a query permission; and
the search unit is further configured to: when the verification unit verifies that the user has the query permission, search all the VNF package identifiers for the at least one target VNF package identifier that is not recorded in the VNF catalog.

16. The apparatus according to claim 13, wherein the sending unit is further configured to receive a fourth query request sent by the user, wherein the fourth query request carries all the VNF package identifiers required by the network service, at least one VNF package version number, and a user identity of the user;
the verification unit is further configured to determine, according to the user identity, whether the user has a query permission; and
the search unit is further configured to: when the verification unit verifies that the user has the query permission, search all the VNF package identifiers for at least one target VNF package identifier whose VNF package identifier and VNF package version number are not recorded in the VNF catalog.

17. The apparatus according to any one claims of 13 to 16, wherein the network service package further carries a verification policy file, the verification policy file is used for the network functions virtualization orchestrator to determine how to verify integrity and authenticity of the VNF package, and the verification unit is further configured to:
if the network service package does not carry the verification policy file, verify integrity and authenticity of all VNF packages and the NSD, wherein the integrity represents whether a program carried in a VNF package is complete, and the authenticity represents whether a function of the program carried in the VNF package is consistent with description in a virtualized network function descriptor VNFD; or
if the network service package carries the verification policy file, parse the verification policy file and determine a verification policy.

18. The apparatus according to any one of claims 13 to 17, wherein the uploading unit is specifically configured to:
add each target VNF package to the VNF catalog successively, and send an image carried in the VNF package to a VIM; and
when all VNF packages described in the NSD are added to the VNF catalog, add the NSD to an NSD catalog.

19. A data uploading system, wherein the system comprises the apparatus according to any one of claims 10 to 12, and the apparatus according to any one of claims 13 to 18.

20. A data uploading apparatus, wherein the apparatus is located in a device to which a user currently logs in, the user is a user requesting provision of a network service NS, and the apparatus comprises:
a transmitter, configured to send a first query request to a network functions virtualization orchestrator NFV orchestrator, wherein the query request carries all virtualized network function package VNF package identifiers required by the network service;
a receiver, configured to receive a query result sent by the network functions virtualization orchestrator, wherein the query result carries a target VNF package identifier list, and the target VNF package identifier list is used to record an identifier of at least one target VNF package that is not uploaded; and
a processor, configured to: when the target VNF package identifier list received by the receiver is not empty, obtain the at least one target VNF package according to the target VNF package identifier list, wherein
the transmitter is further configured to encapsulate a network service descriptor NSD of the network service, the at least one target VNF package obtained by the processor, and an identity verification file to send to the network functions virtualization orchestrator, wherein the identity verification file is used for verifying validity of a user identity.

21. The apparatus according to claim 20, wherein the transmitter is further configured to:
send a second query request to the network functions virtualization orchestrator, wherein the second query request carries all the VNF package identifiers required by the network service and at least one VNF package version number, and each VNF package version number is corresponding to one VNF package identifier; or
send a third query request to the network functions virtualization orchestrator, wherein the third query request carries all the VNF package identifiers required by the network service and a user identity of the user; or
send a fourth query request to the network functions virtualization orchestrator, wherein the fourth query request carries all the VNF package identifiers required by the network service, at least one VNF package version number, and a user identity of the user.

22. The apparatus according to claim 20 or 21, wherein the transmitter is further configured to encapsulate the NSD of the network service, the at least one target VNF package, the identity verification file, and a verification policy file to send to the network functions virtualization orchestrator, wherein the verification policy file is used for the network functions virtualization orchestrator to determine how to verify integrity and authenticity of the VNF package.

23. A data uploading apparatus, wherein the apparatus is located in a network functions virtualization orchestrator, and the apparatus comprises:
a receiver, configured to receive a first query request sent by a user, wherein the query request carries all VNF package identifiers required by a network service requested by the user;
a processor, configured to search all the VNF package identifiers received by the receiver for at least one target VNF package identifier that is not recorded in a VNF catalog; and
a transmitter, configured to send a target VNF package identifier list to the user, wherein the target VNF package identifier list is used to record the at least one target VNF package identifier found by the processor, wherein
the receiver is further configured to receive a network service package sent by the user, wherein the network service package carries a network service descriptor NSD of the network service, at least one target VNF package corresponding to the at least one target VNF package identifier, and an identity verification file; and
the processor is further configured to perform identity verification on the user according to the identity verification file received by the receiver; and
when the verification succeeds, complete an uploading procedure for each target VNF package successively.

24. The apparatus according to claim 23, wherein the receiver is further configured to:
receive a second query request sent by the user, wherein the second query request carries all the VNF package identifiers required by the network service and at least one VNF package version number, and each VNF package version number is corresponding to one VNF package identifier; and
the processor is further configured to:
search all the VNF package identifiers for at least one target VNF package identifier whose VNF package identifier and VNF package version number are not recorded in the VNF catalog.

25. The apparatus according to claim 23, wherein the receiver is further configured to receive a third query request sent by the user, wherein the third query request carries all the VNF package identifiers required by the network service and a user identity of the user; and
the processor is further configured to determine, according to the user identity received by the receiver, whether the user has a query permission; and
when verifying that the user has the query permission, search all the VNF package identifiers for the at least one target VNF package identifier that is not recorded in the VNF catalog.

26. The apparatus according to claim 23, wherein the transmitter is further configured to receive a fourth query request sent by the user, wherein the fourth query request carries all the VNF package identifiers required by the network service, at least one VNF package version number, and a user identity of the user; and
the processor is further configured to determine, according to the user identity, whether the user has a query permission; and
when verifying that the user has the query permission, search all the VNF package identifiers for at least one target VNF package identifier whose VNF package identifier and VNF package version number are not recorded in the VNF catalog.

27. The apparatus according to any one claims of 23 to 26, wherein the network service package further carries a verification policy file, the verification policy file is used for the network functions virtualization orchestrator to determine how to verify integrity and authenticity of the VNF package, and the processor is further configured to:
if the network service package does not carry the verification policy file, verify integrity and authenticity of all VNF packages and the NSD, wherein the integrity represents whether a program carried in a VNF package is complete, and the authenticity represents whether a function of the program carried in the VNF package is consistent with description in a virtualized network function descriptor VNFD; or
if the network service package carries the verification policy file, parse the verification policy file and determine a verification policy.

28. The apparatus according to any one of claims 23 to 27, wherein the processor is further configured to:
add each target VNF package to the VNF catalog successively, and send an image carried in the VNF package to a VIM; and
when all VNF packages described in the NSD are added to the VNF catalog, add the NSD to an NSD catalog.

29. A data uploading system, wherein the system comprises the apparatus according to any one of claims 20 to 22, and the apparatus according to any one of claims 23 to 28.
